(19) Europäisches Patentamt
European Patent Office
Office européen des brevets

(11) **EP 4 518 503 A1**

(12) **EUROPEAN PATENT APPLICATION**
published in accordance with Art. 153(4) EPC

(43) Date of publication:
**05.03.2025 Bulletin 2025/10**

(21) Application number: **22938962.2**

(22) Date of filing: **26.04.2022**

(51) International Patent Classification (IPC):
***H04W 72/12*** *(2023.01)*

(52) Cooperative Patent Classification (CPC):
Y02D 30/70

(86) International application number:
**PCT/CN2022/089405**

(87) International publication number:
**WO 2023/206106 (02.11.2023 Gazette 2023/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.
Beijing 100085 (CN)**

(72) Inventors:
• **QIAO, Xuemei
  Beijing 100085 (CN)**
• **MU, Qin
  Beijing 100085 (CN)**

(74) Representative: **Dehns Germany Partnerschaft
mbB
Theresienstraße 6-8
80333 München (DE)**

(54) **TERMINAL DEVICE SCHEDULING METHOD AND APPARATUS**

(57) The present disclosure relates to the technical field of communications, and provides a terminal device scheduling method and apparatus. The method comprises: a terminal device sends a random access message to a network device, wherein the random access message is used by the network device to schedule the transmission of subsequent messages of the terminal device, and is used for indicating at least one of the following physical layer channel/signal processing capability information: the type of the terminal device; a PUSCH processing capability and/or a PDSCH processing capability of the terminal device; and the random access message processing delay of the terminal device (201). Therefore, the network device can determine the physical layer channel/signal processing capability of the terminal device according to the random access message, and thus can allocate different resources to the subsequent transmission of the terminal device for terminal devices having different processing capabilities, so that the terminal device can carry out message transmission by means of the reasonably allocated resources, and resource re-scheduling during message transmission failure is avoided, thereby avoiding resource waste, and improving the resource utilization rate.

sending a random access message to a network device, in which the random access message is used for the network device to schedule a transmission of a subsequent message of the terminal, the random access message indicates information on a physical layer channel/signal processing capability including at least one of: a type of the terminal; a physical uplink shared channel (PUSCH) processing capability and/or a physical downlink shared channel (PDSCH) processing capability of the terminal; or a processing delay of the terminal for the random access message

201

FIG. 2

## Description

### TECHNICAL FIELD

The disclosure relates to a field of communication technologies, more particularly to a method and apparatus for a terminal to be scheduled.

### BACKGROUND

Presently, multiple terminals may be accessed in a serving cell, such as, a terminal with a relaxed processing capability, a terminal with an unrelaxed processing capability, and so on. The terminals with different processing capabilities have different physical downlink shared channel (PDSCH) processing times and physical uplink shared channel (PUSCH) processing times. For the above terminals with different processing capabilities, when a network device schedules all the terminals accessed in the serving cell based on the unrelaxed processing capability, it may be caused that the terminal with the relaxed processing capability has no time to process or prepare a PDSCH or a PUSCH, thus making it difficult to send a random access message of the terminal with the relaxed processing capability normally.

### SUMMARY

Embodiments of the disclosure provide a method and apparatus for a terminal to be scheduled, which may be applied to the field of communication technologies, and may realize that a network device may determine the physical layer channel/signal processing capability of a terminal based on a random access messages, that is, determine whether the terminal has a relaxed processing capability or an unrelaxed processing capability, thus performing targeted scheduling for the transmission of the subsequent message of the terminal based on the processing capability of the terminal, and realizing that different resources are allocated to subsequent transmissions of the terminals with different processing capabilities. In this way, the terminal may perform message transmission through the resources allocated reasonably, and the resource rescheduling is avoided when the message transmission fails, thus avoiding the resource waste and improving the resource utilization rate.

In a first aspect, an embodiment of the disclosure provides a method for a terminal to be scheduled. The method is executed by the terminal. The method includes: sending a random access message to a network device, in which the random access message is used for the network device to schedule a transmission of a subsequent message of the terminal. The random access message indicates at least one of information on a physical layer channel/signal processing capability including: a type of the terminal; a physical uplink shared channel (PUSCH) processing capability and/or a physical downlink shared channel (PDSCH) processing capability of the terminal; or a processing delay of the terminal for the random access message.

In a second aspect, another embodiment of the disclosure provides a method for a terminal to be scheduled. The method is executed by the network device. The method includes: receiving a random access message sent by a terminal; and scheduling a transmission of a subsequent message of the terminal in response to the random access message. The random access message indicates at least one of information on a physical layer channel/signal processing capability including: a type of the terminal; a physical uplink shared channel (PUSCH) processing capability and/or a physical downlink shared channel (PDSCH) processing capability of the terminal; or a processing delay of the terminal for the random access message.

In a third aspect, an embodiment of the disclosure provides an apparatus for a terminal to be scheduled. The apparatus is applied to the terminal. The apparatus has some or all of the functions in the method of the first aspect. For example, functions of the apparatus for the terminal to be scheduled may have the functions in some or all embodiments in the disclosure, and may also have the function of independently implementing any of embodiments in the disclosure. The function may be realized by hardware, or by hardware executing corresponding software. The hardware or software includes one or more units or modules corresponding to the above functions.

In an implementation, a structure of the apparatus for the terminal to be scheduled may include a receiving and sending unit and a processing unit, and the processing unit is configured to support the apparatus for the terminal to be scheduled to perform the corresponding functions in the above method. The sending and receiving unit is configured to support a communication between the apparatus for the terminal to be scheduled and other device. The apparatus for the terminal to be scheduled may further include a storage unit for coupling with the receiving and sending unit and the processing unit, and for storing necessary computer programs and data of the apparatus for the terminal to be scheduled.

As an example, the processing unit may be a processor, the receiving and sending unit may be a transceiver or a communication interface, and the storage unit may be a memory.

In a fourth aspect, another embodiment of the disclosure provides an apparatus for a terminal to be scheduled. The apparatus is applied to the network device. The apparatus has some or all of the functions in the method of the second aspect. For example, the functions of the apparatus for the terminal to be scheduled may have functions in some or all embodiments in the disclosure, and may also have the function of independently implementing any of embodiments in the disclosure. The function may be realized by hardware, or by hardware executing corresponding software. The hardware or software includes one or more units or modules corresponding to the above functions.

In an implementation, a structure of the apparatus for the terminal to be scheduled may include a receiving and sending unit and a processing unit, and the processing unit is configured to support the apparatus for the terminal to be scheduled to perform the corresponding functions in the above method. The sending and receiving unit is configured to support a communication between the apparatus for the terminal to be scheduled and other device. The apparatus for the terminal to be scheduled may further include a storage unit for coupling with the receiving and sending unit and the processing unit, and for storing necessary computer programs and data of the apparatus for the terminal to be scheduled.

As an example, the processing unit may be a processor, the receiving and sending unit may be a transceiver or a communication interface, and the storage unit may be a memory.

In a fifth aspect, an embodiment of the disclosure provides a communication device. The communication device includes a processor and a memory for storing a computer program. When the processor is configured to execute the computer program stored in the memory, the communication device is caused to perform the method of the first aspect.

In a sixth aspect, an embodiment of the disclosure provides a communication device. The communication device includes a processor and a memory for storing a computer program. When the processor is configured to execute the computer program stored in the memory, the communication device is caused to perform the method of the second aspect.

In a seventh aspect, an embodiment of the disclosure provides a communication device. The communication device includes a processor and an interface circuit. The interface circuit is configured to receive code instructions and to transmit the code instructions to the processor. When the processor is configured to execute the code instructions, the communication device is caused to execute the method of the first aspect.

In an eighth aspect, an embodiment of the disclosure provides a communication device. The communication device includes a processor and an interface circuit. The interface circuit is configured to receive code instructions and to transmit the code instructions to the processor. When the processor is configured to execute the code instructions, the communication device is caused to execute the method of the second aspect.

In a ninth aspect, an embodiment of the disclosure provides a communication system including a communication device of the third aspect and a communication device of the fourth aspect, or including a communication device of the fifth aspect and a communication device of the sixth aspect, or including a communication device of the seventh aspect and a communication device of the eighth aspect.

In a tenth aspect, an embodiment of the disclosure provides a computer-readable storage medium for storing instructions for the terminal. When the instructions are executed, the terminal is caused to execute the method of the first aspect.

In an eleventh aspect, an embodiment of the disclosure provides a computer-readable storage medium for storing instructions for the network device. When the instructions are executed, the terminal is caused to execute the method of the second aspect.

In a twelfth aspect, the disclosure further provides a computer program product including a computer program. When the computer program is run on a computer, the computer is caused to perform the method of the first aspect.

In a thirteenth aspect, the disclosure further provides a computer program product including a computer program. When the computer program is run on a computer, the computer is caused to perform the method of the second aspect.

In a fourteenth aspect, the disclosure provides a chip system. The chip system includes at least one processor and an interface and is configured to support a terminal to realize functions related to the first aspect, for example, determining or processing at least one of data and information related to the above method. In a possible design, the chip system also includes a memory for storing a necessary computer program and data of the terminal. The chip system may be combined by chips, and may also include chips and other discrete devices.

In a fifteenth aspect, the disclosure provides a chip system. The chip system includes at least one processor and an interface and is configured to support a network device to realize functions related to the second aspect, for example, determining or processing at least one of data and information related to the above method. In a possible design, the chip system also includes a memory for storing a necessary computer program and data of the network device. The chip system may be combined by chips, and may also include chips and other discrete devices.

In a sixteenth aspect, the disclosure provides a computer program. When the computer program is run on a computer, the computer is caused to execute the method of the first aspect.

In a seventeenth aspect, the disclosure provides a computer program. When the computer program is run on a computer, the computer is caused to execute the method of the second aspect.

BRIEF DESCRIPTION OF THE DRAWINGS

In order to more clearly illustrate embodiments of the disclosure or technical solutions in the related art, accompanying drawings needed to use in embodiments of the disclosure or the related art will be introduced clearly below.

FIG. 1 is a schematic diagram illustrating a communication system according to an embodiment of the disclosure.

FIG. 2 is a flow chart illustrating a method for a terminal to be scheduled according to another embodiment of the disclosure.

FIG. 3 is a flow chart illustrating a method for a terminal to be scheduled according to another embodiment of the disclosure.

FIG. 4 is a flow chart illustrating a method for a terminal to be scheduled according to another embodiment of the disclosure.

FIG. 5 is a flow chart illustrating a method for a terminal to be scheduled according to another embodiment of the disclosure.

FIG. 6 is a flow chart illustrating a method for a terminal to be scheduled according to another embodiment of the disclosure.

FIG. 7 is a flow chart illustrating a method for a terminal to be scheduled according to another embodiment of the disclosure.

FIG. 8 is a flow chart illustrating a method for a terminal to be scheduled according to another embodiment of the disclosure.

FIG. 9 is a flow chart illustrating a method for a terminal to be scheduled according to another embodiment of the disclosure.

FIG. 10 is a block diagram illustrating an apparatus for a terminal to be scheduled according to an embodiment of the disclosure.

FIG. 11 is a block diagram illustrating a communication device according to an embodiment of the disclosure.

FIG. 12 is a block diagram illustrating a chip according to an embodiment of the disclosure.

## DETAILED DESCRIPTION

For ease of understanding, terminologies involved in the disclosure are first introduced.

1. Physical uplink shared channel (PUSCH)

PUSCH is configured to carry an uplink high-layer/physical-layer control signaling, and user data.

2. Physical downlink shared channel (PDSCH)

PDSCH is configured to carry a downlink high-layer control signaling, and user data.

3. Physical downlink control channel (PDCCH)

PDCCH is configured to transmit downlink control information (DCI) related to the PUSCH and the PDCCH. The DCI includes some related contents, such as resource block (RB) allocation information, a hybrid automatic repeat request (HARQ) process identification and so on. A terminal may process PDSCH data or PUSCH data correctly only when the terminal decodes the DCI correctly.

4. Band width part (BWP).

BWP is a subset of a channel bandwidth of the terminal. The configuration of the BWP adaptively and flexibly adjusts a receiving bandwidth and a sending bandwidth of the terminal based on a bandwidth in a new radio (NR), such that the receiving bandwidth and the sending bandwidth of the terminal do not need to be as large as a bandwidth of a cell. The terminal may only activate one uplink (UL) BWP and one downlink (DL) BWP at the same time, each BWP is configured with one sub carrier spacing (SCS), and all signals and channels on the BWP adopt such SCS, unless otherwise specified.

5. Hybrid automatic repeat request (HARQ)

HARQ is a new communication technology based on a forward error correction (FEC) and an automatic repeat request (ARQ) for better anti-interference and anti-fading and improving system throughput (effectiveness) and reliability of data transmission.

For better understanding a method and apparatus for a terminal to be scheduled disclosed in embodiments of the disclosure, description is made below to a communication system to which embodiments of the disclosure are applicable.

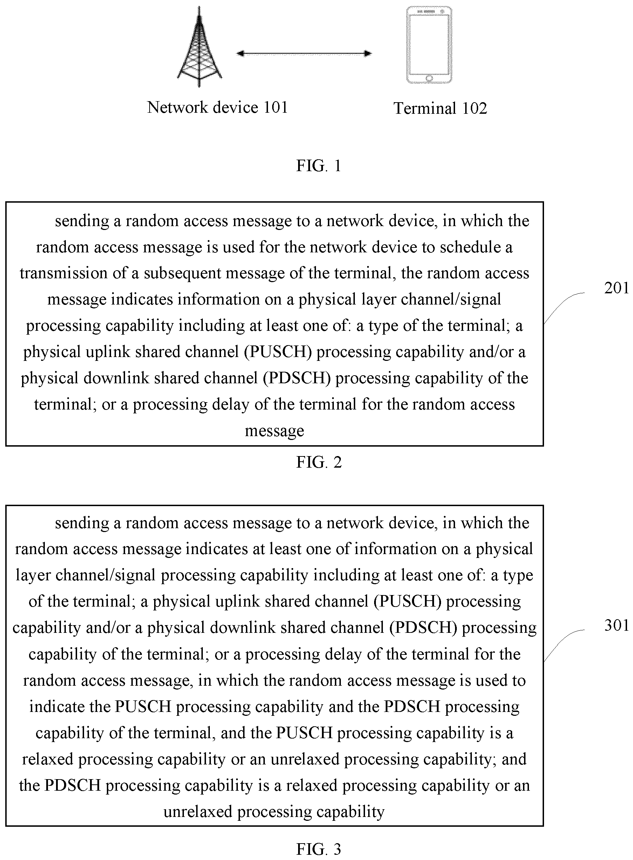

Referring to FIG. 1, FIG. 1 is a schematic diagram illustrating a communication system according to an embodiment of the disclosure. The communication system may include, but be not limited to, a network device and a terminal. The number and form of devices illustrated in FIG. 1 are only for example and do not constitute a limitation to embodiments of the disclosure. In a practical application, two or more network devices and two or more terminals may be included. The communication system illustrated in FIG. 1 takes an example of including one network device 101 and one terminal 102.

It should be noted that the technical solution of embodiments of the disclosure may be applied to various communication systems, such as, a long term evolution (LTE) system, a 5th generation (5G) mobile communication system, a 5G new radio (NR) system, or another future new mobile communication system.

The network device 101 in embodiments of the disclosure is an entity for sending or receiving a signal in a network side. For example, the network device 101 may be an evolved NodeB (eNB), a transmission reception point (TRP), a next generation NodeB (gNB) in an NR system, a base station in other future mobile communication systems, or an access node in a wireless fidelity (WiFi) system. Detailed technologies and detailed device forms employed by the network device are not limited in embodiments of the disclosure. The network device provided in embodiments of the disclosure may be combined by a central unit (CU) and a distributed unit (DU). The CU may also be referred to as a control unit. A protocol layer of the network device, such as the base station, may be separated by employing a CU-DU structure, in which, part of functions of the protocol layer are centrally controlled by the CU, while part or all of remaining functions of the protocol layer are distributed in the DU. The DU is controlled by the CU.

The terminal 102 in embodiments of the disclosure is an entity for receiving or sending a signal in a user side, such as, a mobile phone. The terminal may also be referred to as a terminal, a user equipment (UE), a mobile station (MS), a mobile terminal (MT), or the like. The terminal may be an automobile with a communication function, a smart automobile, a mobile phone, a wearable device, a pad, a computer with a wireless transceiver function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, a wireless terminal in a smart home, and the like. Detailed technologies and detailed device forms employed by the terminal are not limited in embodiments of the disclosure.

It may be understood that, the communication system described in embodiments of the disclosure aims to explain the technical solution of embodiments of the disclosure more clearly, and does not constitute a limitation on the technical solution according to embodiments of the disclosure. The skill in the art knows that, with an evolution of system architecture and an emergence of a new business scenario, the technical solution according to embodiments of the disclosure is also applicable to a similar technical problem.

In the above communication system, a time of a PDSCH processing procedure of the terminal is calculated by:

$$T_{proc,1} = \left(N_1 + d_{1,1}\right)\left(2048 + 144\right) \cdot \kappa 2^{-\mu} \cdot T_c, \quad (1)$$

where, $T_{proc,1}$ represents the time of the PDSCH processing procedure of the terminal; a value of $N_1$ is related to a value of $\mu$; there is a mapping relationship between the value of $\mu$ and the sub carrier spacing, and the value of $\mu$ may be determined based on the sub carrier pacing; $d_{1,1}$ represents a processing time in a specific case when a PDSCH mapping mode is A or B; $T_C$ represents a basic time unit in the communication system; and $\kappa$ is defined in Article 4.1 of the 3GPP standard TS38.214, that is, $\kappa = \dfrac{T_s}{T_c} = 64$, in which $T_s = \dfrac{1}{\Box f_{ref} * N_{f,ref}}$, $\Box f_{ref} = 15*10^3$ Hz, $N_{f,ref} = 2048$, $T_c = \dfrac{1}{\Box f_{max} * N_f}$, $\Box f_{max} = 480*10^3$ Hz, and $N_f = 4096$.

As an example, the value of $N_1$ is illustrated in Table 1.

Table 1 Time of the PDSCH processing procedure of PDSCH processing capability 1

| $\mu$ | PDSCH decoding time $N_1$ [symbols] |
|---|---|
| 0 | 8 |
| 1 | 10 |
| 2 | 17 |
| 3 | 20 |

It may be understood that, each element in Table 1 exists independently and each mapping relationship in Table 1 exists independently. These elements and mapping relationships are listed in the same table for illustration, but it does not mean that all the elements and the mapping relationships in Table 1 may exist at the same time as illustrated in Table 1. The value of each element and each mapping relationship are independent of a value of other element or other mapping relationship in Table 1. Therefore, the skilled in the art may understand that the value of each element and each mapping relationship in Table 1 are respectively independent embodiments.

A PDSCH processing procedure of the terminal includes: a PDSCH decoding procedure and a physical uplink control channel (PUCCH) preparing procedure. Correspondingly, the time $T_{proc,1}$ of the PDSCH processing procedure of the terminal includes a PDSCH decoding time and a PUCCH preparing time. The terminal may perform HARQ-ACK feedback only after $T_{proc,1}$ at the end of a last symbol transmitted by the PDSCH. The network device needs to consider the PDSCH decoding time and PUCCH preparing time of the terminal when indicating a time domain resource of the HARQ-ACK feedback.

In Release 15, a calculation formula of a time of a PUSCH processing procedure of the terminal is represented by:

$$T_{proc,2} = \max\left(\left(N_2 + d_{2,1}\right)\left(2048 + 144\right) \cdot \kappa 2^{-\mu} \cdot T_c, \ d_{2,2}\right), (2),$$

where, $T_{proc,\ 2}$ represents the time of the PUSCH processing procedure of the terminal, and the terminal may only perform PUSCH transmission after Tproc,2 at the end of receiving a scheduled DCI (that is, $K2 \geq T_{proc,\ 2}$, where K2 represents a time interval between a transmitting end time point when the terminal receives the DCI and a transmitting start time point when the terminal performs the PUSCH transmission). The network needs to consider the time of the PUSCH processing procedure of the terminal when scheduling the PUSCH. A value of N2 is related to a value of $\mu$ of the terminal. $d_{2,1}$ represents a processing time when a demodulation reference signal (DMRS) is configured in a specific case. When a first symbol of the time domain resource allocated by the PUSCH only includes the DMRS, $d_{2,1}=0$; otherwise, $d_{2,1} = 1$. $d_{2,2}$ represents a time delay introduced by BWP switching. When the DCI triggers switching of the uplink BWP, $d_{2,2}$ is a switching delay of the BWP; otherwise, $d_{2,2}=0$.

As an example, the value of N2 may be illustrated in Table 2.

Table 2 PUSCH preparing time $N_2$

| $\mu$ | PUSCH preparing time $N_2$ [symbols] |
|---|---|
| 0 | 10 |
| 1 | 12 |
| 2 | 23 |
| 3 | 36 |

It may be understood that, each element in Table 2 exists independently and each mapping relationship in Table 2 exists independently. These elements and mapping relationships are listed in the same table for illustration, but it does not mean that all the elements and the mapping relationships in Table 2 may exist at the same time as illustrated in Table 2. The value of each element and each mapping relationship are independent of a value of other element or other mapping relationship in Table 2. Therefore, the skilled in the art may understand that the value of each element and each mapping relationship in Table 1 are respectively independent embodiments.

For a two-step random access procedure, a minimum processing time (also called processing delay) of the terminal is required to be that: the terminal may perform ACK feedback after $N_{T,1}+0.75ms$ at the end of receiving a second random access message (MsgB) by the terminal (for example, $K1 \geq N_{T,1}+0.75ms$, where K1 represents an time interval between a transmitting end time point of the MsgB and a transmitting start time point of the ACK feedback). $N_{T,1}$ represents N1 in the calculation formula for the time of the PDSCH processing procedure of a terminal with an unrelaxed processing capability.

As an example, a PUSCH preparing time (or called preparing delay) of a processing capability 1 of a normal terminal (also called UE processing capability 1) may be relaxed to N multiples. For example, taking N being 2 as an example, the PUSCH preparing time may be illustrated in Table 3.

Table 3 PUSCH preparing time N2

| $\mu$ | PUSCH preparing time $N_2$ [symbols] |
|---|---|
| 0 | 8->16 |

(continued)

| $\mu$ | PUSCH preparing time $N_2$ [symbols] |
|---|---|
| 1 | 10->20 |
| 2 | 17->34 |
| 3 | 20->40 |

It may be understood that, each element in Table 1 exists independently, and each mapping relationship in Table 3 exists independently. These elements and mapping relationships are listed in the same table for illustration, but it does not mean that all the elements and the mapping relationships in Table 3 may exist at the same time as illustrated in Table 3. The value of each element and each mapping relationship are independent of a value of other element or other mapping relationship in Table 3. Therefore, the skilled in the art may understand that the value of each element and each mapping relationship in Table 1 are respectively independent embodiments.

A number in the left of "->" in Table 3 represents the PUSCH preparing time of the normal terminal, and a number in the right of "->" represents a PUSCH preparing time of an evolved terminal with a reduced capability (eRedcap UE) after relaxing a processing capability.

Release 18 proposes a processing delay of the terminal to be relaxed, that is, the PDSCH processing time ($N_1$) and the PUSCH preparing time ($N_2$). For example, the processing delay is relaxed to M multiples of the UE processing capability 1 in Release 16 to reduce the terminal cost. The above example taking M =2 is taken for illustration, but it is not limited herein.

A component cost of the terminal mainly involved includes:

baseband: a receiver processing block (channel estimation, demodulation, de-mapping, frequency equalization, a reference signal receiving power (RSRP) /reference signal receiving (RSR) estimation and channel state information (CSI) processing);
baseband: low density parity check (LDPC) decoding;
baseband: DL control processing and decoder;
baseband: a UL processing block (generation and modulation of a reference signal, preparation of the PUSCH and the PUCCH).

An influence factor of the processing delay is execution of a slow processor.

In an eRedcap project, a PDSCH processing delay and a PUSCH preparing delay may be relaxed for certain service types of terminals (such as a factory sensor and other non-safety sensors).

In embodiments of the disclosure, based on different channel processing delays, the terminal may be divided into two types, that is, a terminal with a relaxed processing capability and a terminal with the unrelaxed processing capability. It may be understood that, the terminal with the relaxed processing capability is a terminal that relaxes a physical layer channel or physical layer signal processing capability, and there is a relatively long channel processing delay. The terminal with the unrelaxed processing capability is a terminal that does not relax the physical layer channel or physical layer signal processing capability, and there is a relatively short channel processing delay.

In a possible implementation, the terminal with the relaxed processing capability may be a reduced-capability terminal with the relaxed processing capability, such as the eRedCap UE. The terminal with the unrelaxed processing capability may also be called non-eRedCap UE in embodiments of the disclosure, and the terminal may include at least one of: a normal terminal with a reduced capability (also called RedCap UE) and a normal terminal (also called non-RedCap UE). Furthermore, since there are three types of terminals (the eRedCap UE, the RedCap UE, and the normal UE), multiple solutions for relaxing the processing capability may be employed. The solution may be that, for the eRedCap UE and the RedCap UE, a channel processing capability of the RedCap UE is not relaxed while a channel processing capability of the eRedCap UE may be relaxed; and for the RedCap UE and the non-RedCap UE, both the channel processing capabilities of the normal UE and the RedCap UE are not relaxed. In a possible implementation, a parameter relationship of the terminals may be: the eRedCap UE> the RedCap UE; and the eRedCap UE >the normal UE. That is, the eRedCap UE that relaxes the processing capability has a largest relaxed processing delay, and the RedCap UE and the normal UE have small relaxed processing delays while the RedCap UE and the normal UE do not relax the processing capability.

In another possible implementation, the terminal with the relaxed processing capability may include at least one of: the evolved terminal with the reduced capability that relaxing the processing capability (that is, the eRedCap UE), and a normal terminal with the relaxed processing capability. The terminal with the unrelaxed processing capability may include at least one of: the normal terminal with the reduced capability (that is, the RedCap UE) and the normal terminal (that is, the non-RedCap UE).

In the related art, the terminal may report its own processing capability to the network device by an independent physical random access channel (PRACH) resource. At the same time, for a two-step random access, the processing capability of the terminal may also be reported through a PUSCH of a random access message A (MsgA).

However, a definition for reported content of the terminal and a reporting trigger condition need to be further defined and clarified. For example, for the eRedcap UE, there needs to determine whether it is necessary for the terminal to report its own processing capability to the network device; and/or to determine that the eRedcap terminal reports its own processing capability to the network device under what triggering condition; and/or to determine whether the terminal reports a PUSCH processing capability and a PDSCH processing capability to the network device at the same time or the terminal reports a PUSCH processing capability and a PDSCH processing capability separately to the network device when the terminal needs to report its own processing capability to the network device.

For the above problems, embodiments of the disclosure provide a method and apparatus for a terminal to be scheduled.

Referring to FIG. 2, FIG. 2 is a flow chart illustrating a method for a terminal to be scheduled according to an embodiment of the disclosure. The method for the terminal to be scheduled may be performed by the terminal illustrated in FIG. 1. As illustrated in FIG. 2, the method for the terminal to be scheduled may include, but is not limited to, the following.

At block 201, a random access message is sent to a network device, in which the random access message is used for the network device to schedule a transmission of a subsequent message of the terminal. The random access message indicates information on a physical layer channel/signal processing capability including at least one of: a type of the terminal; a physical uplink shared channel (PUSCH) processing capability and/or a physical downlink shared channel (PDSCH) processing capability of the terminal; or a processing delay of the terminal for the random access message.

In embodiments of the disclosure, a physical layer channel/signal refers to a physical layer channel or a physical layer signal. Correspondingly, the physical layer channel/signal processing capability of the terminal refers to a processing capability of the terminal for the physical layer channel or a processing capability of the terminal for the physical layer signal.

The physical layer channel/signal includes one or more of: a PRACH, a PUSCH, a PDSCH, a PUCCH, a PDCCH, a channel state information reference signal (CSI-RS), a sounding reference signal (SRS), a phase tracking reference signal (PTRS), or a tracking reference signal (TRS).

The processing capability for the CSI-RS refers to a capability for performing calculation on a feedback of the CSI-RS. The feedback of the CSI-RS may be, such as a precoding matrix indicator (PMI), a rank indication (RI), a channel quality indicator (CQI), and the like.

In embodiments of the disclosure, the random access message is an interaction message between the terminal and the network device in a random access procedure. For example, for the two-step random access, the interaction message may include a random access message A(MsgA) and a random access message B(MsgB), and for a four-step random access, the interaction message may include a first random access message (Msg1), a second random access message (Msg2), a third random access message (Msg3) and a fourth random access message (Msg4).

In a possible implementation in embodiments of the disclosure, the random access message may be configured to indicate the type of the terminal in the information on the physical layer channel/signal processing capability.

Alternatively, the type of the terminal may be one of the eRedCap UE, the RedCap UE, the normal UE (non-RedCap UE).

As an example, the eRedCap UE may or may not relax the processing capability. In case that the eRedCap UE is forced to relax the processing capability, the random access message reported by each terminal to the network device may indicate the type of the terminal or indicate the relaxed processing capability of the terminal.

In a possible implementation in embodiments of the disclosure, the random access message may be used to indicate the PUSCH processing capability and/or PDSCH processing capability of the terminal in the information on the physical layer channel/signal processing capability.

Alternatively, the PUSCH processing capability may include the relaxed processing capability and the unrelaxed processing capability.

Alternatively, the PDSCH processing capability may include the relaxed processing capability and the unrelaxed processing capability.

As an example, the eRedCap UE may or may not relax the processing capability. In case that the eRedCap UE is not forced to relax the processing capability, that is, the operation for relaxing the processing capability is optional, the random access message reported by each terminal to the network device may indicate the PUSCH processing capability and/or PDSCH processing capability of the terminal.

In a possible implementation in embodiments of the disclosure, the random access message may be used to indicate the processing delay of the terminal for the random access message in the information on the physical layer channel/signal processing capability.

As a possible implementation, there may be a mapping relationship between the processing delay for the random access message and the physical layer channel/signal processing capability of the terminal.

As an example, when the physical layer channel/signal processing capability is the relaxed processing capability, there is a relatively large processing delay for the random access message. In case that the physical layer channel/signal processing capability is the unrelaxed processing capability, there is a relatively small processing delay for the random access message.

As a possible implementation, in case that the random access message is the random access message A(MsgA) in the two-step random access, the processing delay for the random access message may be a time interval between a time point when the terminal receives a last symbol of a second random access message and a time point when the terminal sends a first symbol of a corresponding feedback, that is, the processing delay for the random access message is a time interval between a transmitting end time point when the terminal receives the second random access message and a transmitting start time point when the terminal sends the corresponding feedback.

As an example, the processing delay for the random access message may be the above $N_{T,1}$ in case that the physical layer channel/signal processing capability of the terminal is the unrelaxed processing capability, and the processing delay for the random access message may be $m*N_{T,1}+0.5$ in case that the physical layer channel/signal processing capability of the terminal is the relaxed processing capability, where m may be agreed by a protocol or configured through a signaling by the network device, which is not limited in the disclosure.

It should be noted that, the above $N_{T,1}$ is determined based on the processing capability 1.

As another example, the processing delay for the random access message may be $N_{T,1}+0.5$ in case that the physical layer channel/signal processing capability of the terminal is the unrelaxed processing capability, and the processing delay for the random access message may be $N'_{t,1}+0.5$ in case that the physical layer channel/signal processing capability of the terminal is the relaxed processing capability, where $N'_{t,1}, 1 > N_{T,1}$.

It should be noted that, the above only takes that the random access message indicates one of the information on the physical layer channel/signal processing capability as an example. In a practical application, the random access message may also indicate more information on the physical layer channel/signal processing capability. For example, the random access message may also indicate multiple combinations of the above possible implementations, which is not limited in the disclosure.

In embodiments of the disclosure, the terminal may send the random access message to the network device. The random access message is used to indicate at least one of the information on the physical layer channel/signal processing capability. Correspondingly, after the random access message is received, the network device may determine the physical layer channel/signal processing capability of the terminal based on the random access message, that is, determine whether the terminal has the relaxed processing capability or the unrelaxed processing capability, or determine the relaxed processing capability of the terminal being what type of information. Then, the network device schedules the transmission of the subsequent message of the terminal based on the physical layer channel/signal processing capability of the terminal. For example, the processing delay of the terminal for the random access message may be determined based on the physical layer channel/signal processing capability of the terminal, and the transmission of the subsequent message of the terminal may be scheduled based on the processing delay of the terminal for the random access message.

The subsequent message may include a subsequent random access message and an interaction message of connection establishment between the terminal and a core network device. That is, in the disclosure, the network device may schedule the transmission of the subsequent random access message of the terminal and/or the transmission of the interaction message of the connection establishment between the terminal and the core network device based on the physical layer channel/signal processing capability indicated by the random access message.

Therefore, for the terminals with different processing capabilities, the network device may allocate different resources for the transmission of the subsequent messages of the terminals, such that the terminal may perform message transmission by the resources allocated reasonably, thus avoiding a resource rescheduling when the message transmission fails, avoiding the resource waste and improving the resource utilization rate. The terminals with different processing capabilities are terminals with different physical layer channel processing capabilities, or terminals with different physical layer signal processing capabilities.

With the method for the terminal to be scheduled in embodiments of the disclosure, the terminal sends the random access message to the network device, and the random access message is used for the network device to schedule the transmission of the subsequent message of the terminal. The random access message indicates at least one of the information on the physical layer channel/signal processing capability including: the type of the terminal; the PUSCH processing capability and/or PDSCH processing capability of the terminal; and the processing delay of the terminal for the random access message. Therefore, the network device may determine the physical layer channel/signal processing capability of the terminal based on the random access message, that is, determine whether the terminal has the relaxed processing capability or the unrelaxed processing capability. In this way, a targeted transmission of the subsequent message of the terminal may be performed based on the processing capability of the terminal, and it is realized that, different resources may be allocated to the subsequent transmission of different terminals with different processing capabilities, such that the terminal may perform message transmission through the resources allocated reasonably, and the resource rescheduling is avoided when the message transmission fails, thus avoiding the resource waste and improving the resource utilization rate.

Referring to FIG. 3, FIG. 3 is a flow chart illustrating a method for a terminal to be scheduled according to another embodiment of the disclosure. The method for the terminal to be scheduled may be executed by the terminal in FIG. 1. The method for the terminal to be scheduled may be executed alone, or may be executed together with any embodiment or possible implementation in embodiments of the disclosure, or may be executed together with any technical solution in the related art. As illustrated in FIG. 3, the method for the terminal to be scheduled may include, but is not limited to, the following.

At block 301, a random access message is sent to a network device, in which the random access message indicates at least one of information on a physical layer channel/signal processing capability including at least one of: a type of the terminal; a physical uplink shared channel (PUSCH) processing capability and/or a physical downlink shared channel (PDSCH) processing capability of the terminal; or a processing delay of the terminal for the random access message. The random access message is used to indicate the PUSCH processing capability and the PDSCH processing capability of the terminal. The PUSCH processing capability is a relaxed processing capability or an unrelaxed processing capability; and the PDSCH processing capability is a relaxed processing capability or an unrelaxed processing capability.

The random access message is used for the network device to schedule a transmission of a subsequent message of the terminal. The subsequent message may include a subsequent random access message and an interaction message of connection establishment between the terminal and the core network device. That is, in the disclosure, the network device may schedule the transmission of the subsequent random access message of the terminal and/or the transmission of the interaction message of the connection establishment between the terminal and the core network device based on the processing capability for the physical layer channel/signal indicated by the random access message.

It should be noted that, for the explanation of the random access message, please refer to relevant description in any embodiment of the disclosure, which is not elaborated here.

In embodiments of the disclosure, a capability combination of the PUSCH processing capability and the PDSCH processing capability of the terminal may include following four cases. A first capability combination is that the PUSCH processing capability is the relaxed processing capability and the PDSCH processing capability is the relaxed processing capability. A second capability combination is that the PUSCH processing capability is the relaxed processing capability and the PDSCH processing capability is the unrelaxed processing capability. A third capability combination is that the PUSCH processing capability is the unrelaxed processing capability and the PDSCH processing capability is the relaxed processing capability. A fourth capability combination is that the PUSCH processing capability is the unrelaxed processing capability and the PDSCH processing capability is the unrelaxed processing capability.

In embodiments of the disclosure, the random access message is used to indicate one of the above capability combinations. For example, for the eRedCap UE, the random access message may be used to indicate the first capability combination above.

That is to say, in the disclosure, reporting the PUSCH processing capability and reporting the PDSCH processing capability may be bound, and the terminal may indicate the PUSCH processing capability and the PDSCH processing capability together.

As an example, the first capability combination or the fourth capability combination may be indicated by a flag bit with 1 bit. For example, the first capability combination may be indicated by "0" and the fourth capability combination may be indicated by "1"; or the fourth capability combination may be indicated by "0" and the first capability combination by "1".

As another example, any of the above capability combinations may be indicated by a flag with multiple bits. For example, taking the multiple bits being 2 bits as an example, the first capability combination may be indicated by "11", the second capability combination may be indicated by "10", the third capability combination may be indicated by "01", and the fourth capability combination may be indicated by "00"; or, the fourth capability combination may be indicated by "11", the third capability combination may be indicated by "10", the second capability combination may be indicated by "01", and the first capability combination may be indicated by "00"; or the like.

With the method for the terminal to be scheduled in embodiment of the disclosure, the terminal sends the random access message to the network device, and the random access message is used for the network device to schedule the transmission of the subsequent message of the terminal. The random access message indicates at least one of the information on the physical layer channel/signal processing capability, and the information includes the type of the terminal; the PUSCH processing capability and/or the PDSCH processing capability of the terminal; and the processing delay of the terminal for the random access message. Therefore, based on the random access message, the network device may determine the physical layer channel/signal processing capability of the terminal, that is, determine whether the terminal has the relaxed processing capability or the unrelaxed processing capability, thus performing targeted scheduling for the transmission of the subsequent message of the terminal based on the processing capability of the terminal, and realizing that different resources are allocated to subsequent transmissions of the terminals with different processing capabilities. In this way, the terminal may perform message transmission through the resources allocated reasonably, and the resource rescheduling is avoided when the message transmission fails, thus avoiding the resource waste and improving the resource utilization rate.

It should be noted that, the above possible implementations may be executed separately or in combination, which are not limited in embodiments of the disclosure.

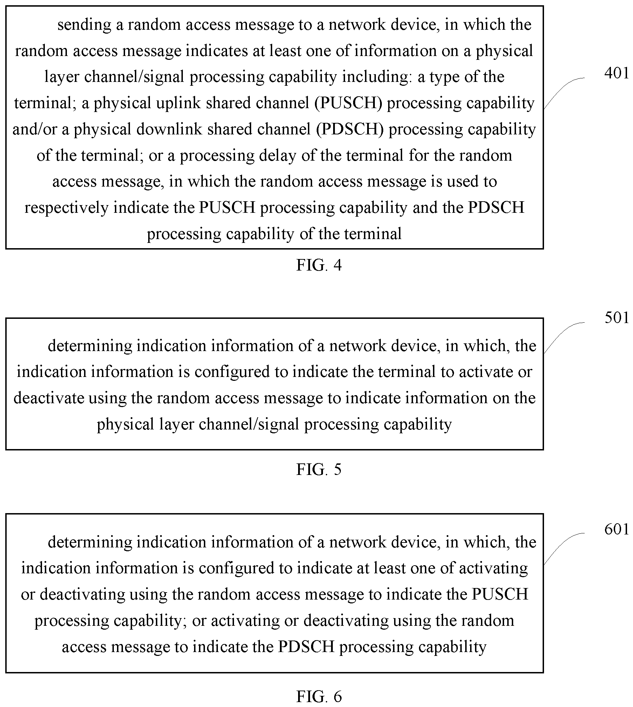

Referring to FIG. 4, FIG. 4 is a flow chart illustrating a method for a terminal to be scheduled according to another embodiment of the disclosure. The method for the terminal to be scheduled may be executed by the terminal in FIG. 1. The method for the terminal to be scheduled may be executed alone, or may be executed together with any embodiment or possible implementation in embodiments of the disclosure, or may be executed together with any technical solution in the related art. As illustrated in FIG. 4, the method for the terminal to be scheduled may include, but is not limited to, the following.

At block 401, a random access message is sent to a network device, in which the random access message indicates at least one of information on a physical layer channel/signal processing capability including: a type of the terminal; a physical uplink shared channel (PUSCH) processing capability and/or a physical downlink shared channel (PDSCH) processing capability of the terminal; or a processing delay of the terminal for the random access message. The random access message is used to respectively indicate the PUSCH processing capability and the PDSCH processing capability of the terminal.

For the PUSCH processing capability and the PDSCH processing capability of the terminal, please refer to description of the above embodiments of the disclosure, which is not elaborated here.

The random access message is used for the network device to schedule the transmission of the subsequent message of the terminal. The subsequent message may include a subsequent random access message and an interaction message of connection establishment between the terminal and a core network device. That is, in the disclosure, the network device may schedule the transmission of the subsequent random access message of the terminal and/or the transmission of the interaction message of the connection establishment between the terminal and the core network device based on the physical layer channel/signal processing capability indicated by the random access message.

It should be noted that, for the explanation of the random access message, please refer to relevant description in any embodiment of the present disclosure, which is not elaborated here.

In embodiments of the disclosure, reporting the PUSCH processing capability and reporting the PDSCH processing capability may be decoupled, and the terminal may indicate the PUSCH processing capability and the PDSCH processing capability separately, that is, the random access message sent by the terminal to the network device is configured to indicate the PUSCH processing capability and the PDSCH processing capability respectively.

As an example, the PUSCH processing capability and the PDSCH processing capability may be indicated in different reporting ways or by different report signalings.

As an example, the PUSCH processing capability of the terminal may be indicated by a first signaling. For example, the PUSCH processing capability may be indicated by a flag with 1 bit in the first signaling. For example, "0" is configured to indicate that "the PUSCH processing capability is the relaxed processing capability", and "1" is configured to indicate that "the PUSCH processing capability is the unrelaxed processing capability"; or "0" is configured to indicate that "the PUSCH processing capability is the unrelaxed processing capability", and "1" is configured to indicate that "the PUSCH processing capability is the relaxed processing capability"

As an example, the PDSCH processing capability of the terminal may be indicated by a second signaling. For example, the PDSCH processing capability may be indicated by a flag with 1 bit in the second signaling. For example, "0" is configured to indicate that "the PDSCH processing capability is the relaxed processing capability", and "1" is configured to indicate that "the PDSCH processing capability is the unrelaxed processing capability"; or "0" is configured to indicate that "the PDSCH processing capability is the unrelaxed processing capability", and "1" is configured to indicate that "the PDSCH processing capability is the relaxed processing capability"

The first signaling is different from the second signaling.

With the method for the terminal to be scheduled in embodiments of the disclosure, the terminal sends the random access message to the network device, and the random access message is used for the network device to schedule the transmission of the subsequent message of the terminal. The random access message indicates at least one of the physical layer channel/signal processing capability information, and the information includes: the type of the terminal; the PUSCH processing capability and/or PDSCH processing capability of the terminal; and the processing delay of the terminal for the random access message. Then, the network device may determine the physical layer channel/signal processing capability of the terminal based on the random access message, that is, determine whether the terminal has the relaxed processing capability or the unrelaxed processing capability, thus performing targeted scheduling for the transmission of the subsequent message of the terminal based on the processing capability of the terminal, and realizing that different resources are allocated to subsequent transmissions of the terminals with different processing capabilities. In this way, the terminal may perform message transmission through the resources allocated reasonably, and the resource rescheduling is avoided when the message transmission fails, thus avoiding the resource waste and improving the resource utilization rate.

It should be noted that the above possible implementations can be executed separately or in combination, which are not limited in embodiments of the disclosure.

Referring to FIG. 5, FIG. 5 is a flow chart illustrating a method for a terminal to be scheduled according to another embodiment of the disclosure. The method for the terminal to be scheduled may be executed by the terminal in FIG. 1. The method for the terminal to be scheduled may be executed alone, or may be executed together with any embodiment or possible implementation in embodiments of the disclosure, or may be executed together with any technical solution in the related art. As illustrated in FIG. 5, the method for the terminal to be scheduled may include, but is not limited to, the following.

At block 501, indication information from a network device is determined, in which, the indication information is configured to indicate the terminal to activate or deactivate using the random access message to indicate information on the physical layer channel/signal processing capability .

In embodiments of the disclosure, the network device may also send the indication information to the terminal, and the indication information is configured to indicate the terminal to activate or deactivate using the random access message to indicate the information on the physical layer channel/signal processing capability. Accordingly, after the indication information is received, the terminal may determine whether the random access message is used to indicate the information on the physical layer channel/signal processing capability based on the indication information.

As an example, in case that the indication information sent by the network indicates the terminal to activate using the random access message to indicate the information on the physical layer channel/signal processing capability , the terminal may send its own information on the physical layer channel/signal processing capability to the network, that is, the random access message sent by the terminal to the network device is used to indicate the information on the physical layer channel/signal processing capability of the terminal.

As another example, in case that the indication information sent by the network device indicates the terminal to deactivate using the random access message to indicate the information on the physical layer channel/signal processing capability, the terminal may not need to send its own information on the physical layer channel/signal processing capability to the network device, that is, the random access message sent by the terminal to the network device may not need to indicate the information on the physical layer channel/signal processing capability of the terminal.

With the method for the terminal to be scheduled in embodiments of the disclosure, the indication information from the network device is determined, in which, the indication information is configured for the terminal device to activate or deactivate using the random access message to indicate the information on the physical layer channel/signal processing capability. In this way, the network device may indicate the terminal whether to report the information on the physical layer channel/signal processing capability.

It should be noted that the above possible implementations may be executed separately or in combination, which are not limited in embodiments of the disclosure.

Referring to FIG. 6, FIG. 6 is a flow chart illustrating a method for a terminal to be scheduled according to another embodiment of the disclosure. The method for the terminal to be scheduled may be executed by the terminal in FIG. 1. The method for the terminal to be scheduled may be executed alone, or may be executed together with any embodiment or possible implementation in embodiments of the disclosure, or may be executed together with any technical solution in the related art. As illustrated in FIG. 6, the method for the terminal to be scheduled may include, but is not limited to, the following.

At block 601, indication information from a network device is determined, in which, the indication information is configured to indicate at least one of: activating or deactivating using the random access message to indicate the PUSCH processing capability; or activating or deactivating using the random access message to indicate the PDSCH processing capability.

The indication information is configured for the terminal to activate or deactivate using the random access message to indicate the information on the physical layer channel/signal processing capability.

It should be noted that, for the explanation of the random access message and the indication information, please refer to relevant description in any embodiment of the disclosure, which is not elaborated here.

In embodiments of the disclosure, the indication information sent by the network device to the terminal may be configured to indicate following four cases. A first case is activating using the random access message to indicate the PUSCH processing capability, and/or activating using the random access message to indicate the PDSCH processing capability. A second case is activating using the random access message to indicate the PUSCH processing capability, and/or deactivating using the random access message to indicate the PDSCH processing capability. A third case is deactivating using the random access message to indicate the PUSCH processing capability, and/or activating using the random access message to indicate the PDSCH processing capability. A fourth case is deactivating using the random access message to indicate the PUSCH processing capability, and/or deactivating using the random access message indicating the PDSCH processing capability.

As an example, the above indication information may be an enabling/disabling signaling. Using the random access message to indicate the PUSCH processing capability and/or to indicate the PDSCH processing capability be activated by the enabling signaling. Using the random access message to indicate the PUSCH processing capability

and/or to indicate the PDSCH processing capability may be deactivated by the disabling signaling.

For example, a minimum remaining system information (RMSI) signaling may be configured to indicate activation or deactivation of using the random access message to indicate the PUSCH processing capability, and/or to indicate activation or deactivation of using the random access message to indicate the PDSCH processing capability.

As an example, in case that reporting the PUSCH processing capability and reporting the PDSCH processing capability are decoupled, a flag with 2 bits in the RMSI signaling may be employed to indicate activation or deactivation of using the random access message to indicate the PUSCH processing capability, and/or to indicate activation or deactivation of using the random access message to indicate the PDSCH processing capability.

For example, the first case may be indicated by "11", the second case may be indicated by "10", the third case may be indicated by "01", and the fourth case may be indicated by "00"; or the fourth case may be indicated by "11", the third case may be indicated by "10", the second case may be indicated by "01", and the first case may be indicated by "00".

As another example, in case that the reporting of the PUSCH processing capability and reporting the PDSCH processing capability are bound (i.e. not decoupled), a flag with 1 bit may be employed to indicate the first case or the fourth case above. For example, the first case may be indicated by "0", and the fourth case may be indicated by "1"; or the fourth case may be indicated by "0", and the first case may be indicated by "1". Furthermore, a flag with 2 bits may be employed to indicate the first case to the fourth case, which is similar to the above example and is elaborated here.

With the method for the terminal to be scheduled in embodiments of the disclosure, the indication information from the network device may be determined, in which, the indication information is configured for the terminal to activate or deactivate using the random access message to indicate the information on the physical layer channel/signal processing capability. In this way, the network device may indicate the terminal whether to report the information on the physical layer channel/signal processing capability.

It should be noted that the above possible implementations may be executed separately or in combination, which are not limited in embodiments of the disclosure.

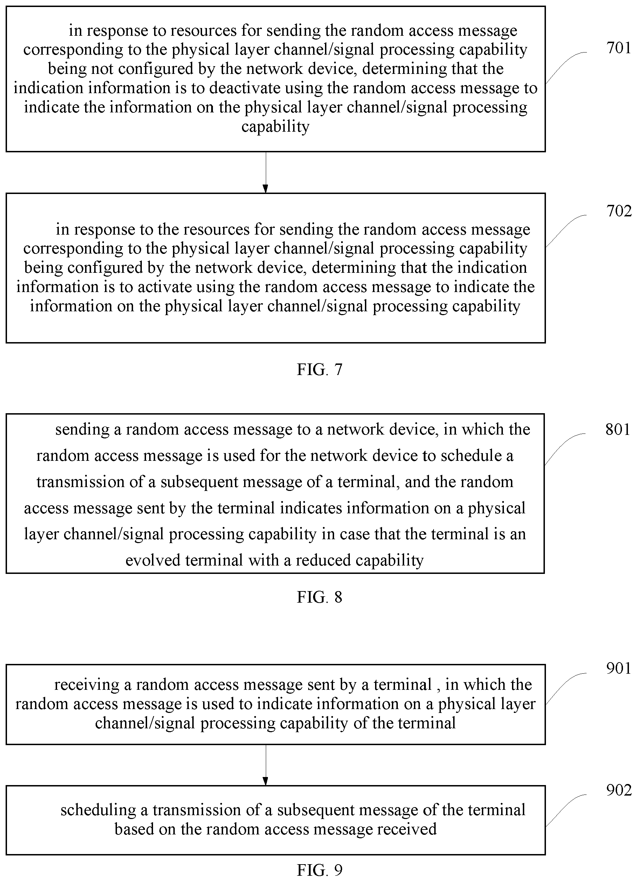

Referring to FIG. 7, FIG. 7 is a flow chart illustrating a method for a terminal to be scheduled according to another embodiment of the disclosure. The method for the terminal to be scheduled may be executed by the terminal in FIG. 1. The method for the terminal to be scheduled may be executed alone, or may be executed together with any embodiment or possible implementation in embodiments of the disclosure, or may be executed together with any technical solution in the related art. As illustrated in FIG. 7, the method for the terminal to be scheduled may include, but is not limited to, the following.

At block 701, in response to resources for sending the random access message corresponding to the physical layer channel/signal processing capability being not configured by the network device, it is determined that the indication information is to deactivate using the random access message to indicate the information on the physical layer channel/signal processing capability.

It should be noted that for the explanation of the random access message and the indication information, please refer to relevant description in any embodiment of the disclosure, which is not elaborated here.

In embodiments of the disclosure, in case that the resources (such as PRACH resources or PUSCH occasion (PO) resources) for sending the random access message corresponding to the physical layer channel/signal processing capability is not configured by the network device, it may be determined that the indication message sent by the network device is configured to deactivate using the random access message to indicate the information on the physical layer channel/signal processing capability.

Correspondingly, the terminal may not need to send its own information on the physical layer channel/signal processing capability to the network device after receiving the indication message sent by the network device. That is, the random access message sent by the terminal to the network device may not need to indicate the information on the physical layer channel/signal processing capability of the terminal.

At block 702, in response to the resources for sending the random access message corresponding to the physical layer channel/signal processing capability being configured by the network device, it is determined that the indication information is to activate using the random access message to indicate the information on the physical layer channel/signal processing capability .

In embodiments of the disclosure, it may be determined that the indication message sent by the network device is configured to activate using the random access message to indicate the information on the physical layer channel/signal processing capability by in case that the resources for sending the random access message corresponding to the physical layer channel/signal processing capability is configured by the network device,. That is, in this way, the indication information sent by the network device is configuration information of the resources, and the resources (such as the PRACH resources or the PO resources) is configured to send the random access message corresponding to the physical layer channel/signal processing capability.

Correspondingly, the terminal may send its own information on the physical layer channel/signal processing capability to the network device after receiving the indication information sent by the network device, that is, the random access message sent by the terminal to the network device is configured to indicate the information on the physical layer channel/signal processing capability of the terminal.

As an example, the network device may configure the resources (such as the PRACH resources or the PO resources) for sending the random access message corresponding to the physical layer channel/signal processing capability through a radio resource control (RRC) signaling or an RMSI signaling. Correspondingly, the terminal may send the random access message to the network device by employing the resources of the random access message corresponding to the physical layer channel/signal processing capability. The random access message is used to indicate the information on the physical layer channel/signal processing capability of the terminal.

With the method for the terminal to be scheduled in embodiments of the disclosure, the indication information from the network device may be determined, in which, the indication information is configured for the terminal to activate or deactivate using the random access message to indicate the information on the physical layer channel/signal processing capability. In this way, the network device may indicate the terminal whether to report the information for the physical layer channel/signal processing capability.

It should be noted that the above possible implementations may be executed separately or in combination, which are not limited in embodiments of the disclosure.

Referring to FIG. 8, FIG. 8 is a flow chart illustrating a method for a terminal to be scheduled according to another embodiment of the disclosure. The method for the terminal to be scheduled may be executed by the terminal in FIG. 1. The method for the terminal to be scheduled may be executed alone, or may be executed together with any embodiment or possible implementation in embodiments of the disclosure, or may be executed together with any technical solution in the related art. As illustrated in FIG. 8, the method for the terminal to be scheduled may include, but is not limited to, the following.

At block 801, a random access message is sent to a network device, in which the random access message is used for the network device to schedule a transmission of a subsequent message of a terminal. In case that the terminal is an evolved terminal with a reduced capability, the random access message sent by the terminal indicates information on a physical layer channel/signal processing capability.

The random access message indicates at least one of the information on the physical layer channel/signal processing capability, and the information includes: a type of terminal; a PUSCH processing capability and/or a PDSCH processing capability of the terminal; and a processing delay of terminal for the random access message.

It should be noted that, for the explanation of the random access message and the subsequent message, please refer to relevant description in any embodiment of the disclosure, which is not elaborated here.

In embodiments of the disclosure, in case that the terminal is the eRedCap UE, all the random access messages sent by the terminal indicate the information on the physical layer channel/signal processing capability of the terminal. That is to say, for the eRedCap UE, the information on the physical layer channel/signal processing capability needs to be reported all the time.

With the method for the terminal to be scheduled in embodiments of the disclosure, the terminal sends the random access message to the network device, and the random access message is used for the network device to schedule the transmission of the subsequent message of the terminal. The random access message indicates at least one of the information on the physical layer channel/signal processing capability, and the information includes: the type of the terminal; the PUSCH processing capability and/or PDSCH processing capability of the terminal, and the processing delay of the terminal for the random access message. Then, the network device may determine the physical layer channel/signal processing capability of the terminal based on the random access message, that is, determine whether the terminal has the relaxed processing capability or the unrelaxed processing capability, thus performing targeted scheduling for the transmission of the subsequent message of the terminal based on the processing capability of the terminal, and realizing that different resources are allocated to subsequent transmissions of the terminals with different processing capabilities. In this way, the terminal may perform message transmission through the resource allocated reasonably, and the resource rescheduling is avoided when the message transmission fails, thus avoiding the resource waste and improving the resource utilization rate.

It should be noted that the above possible implementations may be executed separately or in combination, which are not limited in embodiments of the disclosure.

In any embodiment of the disclosure, reported content of the processing capability of the terminal may include at least one of the following:

1. Information on the physical layer channel/signal Processing capability of the terminal. For the eRedcap UE, in case that relaxation of the processing capability is forced, the reported content of the terminal may include the type of the terminal. In case that the relaxation of the processing capability is optional, the reported content of the terminal that relaxes the physical layer channel/signal processing capability may include the processing capability of the terminal, that is, the PUSCH processing capability and/or the PDSCH processing capability is reported.

2. PUSCH processing capability and PDSCH processing capability. In case that reporting the PUSCH processing capability and reporting the PDSCH processing capability are decoupled, the terminal may separately indicate a relaxed PUSCH processing capability and a relaxed PDSCH processing capability, for example, reporting in different report ways/signaling. In case that reporting the PUSCH processing capability and reporting the PDSCH processing capability are bound, the terminal may indicate the PDSCH processing capability and the PUSCH processing capability together.

In any embodiment of the disclosure, an activation/deactivation of a report function for the processing capability of the terminal may be: always reporting the processing capability for the eRedcap UE with the relaxed processing capability; or using an enabling/disabling signaling to indicate whether the terminal with the relaxed processing capability employs a PRACH/MSG3/MSGB PUSCH/PUCH HARQ-ACK to report the processing capability.

For example, an enabling/disabling indication may be performed by an RMSI signaling. In case that reporting the PUSCH processing capability and reporting the PDSCH processing capability report are decoupled, two bits or two pieces of different indication information may be employed to activate/deactivate the report function of the PUSCH processing capability and the PDSCH processing capability respectively.

As an example, some report ways may be indicated in an implicit enabling way. For example, in case that an RRC signaling or RMSI signaling is not configured with an independent PRACH resource or an independent PO resource, it means that the terminal with the relaxed processing capability may not report its own processing capability; otherwise, report its own capability.

In any embodiment of the disclosure, the relaxation of the processing capability is optional for the eRedcap UE. For the terminal with the relaxed processing capability, the terminal may report the processing capability to the network device when meeting a condition of:

first, reporting the processing capability by the random access message being necessary and forced ; and second, reporting the processing capability by the random access message being optional. In this case, the network device activates reporting the processing capability of the terminal by the indication information, that is, the network device, by the indication information or an activation signaling, activates using the random access message to indicate the PUSCH processing capability and/or PDSCH processing capability.

Alternatively, the relaxation of the PUSCH processing capability and the PDSCH processing capability may be decoupled, and a report signaling of the terminal may be designed together (i.e. reporting the PUSCH processing capability and the PDSCH processing capability simultaneously by one signaling) or may be separated (i.e. reporting the PUSCH processing capability and the PDSCH processing capability respectively by two signaling). The activation signaling of the network device may be designed together (i.e., one signaling is configured to activate or deactivate using the random access message to indicate the PUSCH processing capability and to activate or deactivate using the random access message to indicate the PDSCH processing capability at the same time), or may be separated (i.e., two signaling are configured to respectively activate or deactivate using the random access message to indicate the PUSCH processing capability and to activate or deactivate using the random access message to indicate the PDSCH processing capability ).

In any embodiment of the disclosure, for the two-step random access, the processing capability of the terminal is constrained as follows. The processing delay (i.e., the processing delay for the random access message) of the terminal (eRedcap UE) with the relaxed processing capability in a two-step random access procedure may be defined based on a processing capability of a new terminal, for example, as illustrated in Table 4.

Table 4 Processing delay for the random access message

| A minimum time interval from receiving the MsgB feedback to sending the HARQ-ACK by the terminal. | $m*N_{T,1}+0.5$, or $N'_{T,1}+0.5$ |
| --- | --- |

In conclusion, the network device may determine the physical layer channel/signal processing capability of the terminal, such that the network device may perform reasonable scheduling on the two-step random access or the four-step random access of the terminal or a subsequent signaling interaction of connection establishment in a core network (CN) side based on the physical layer channel/signal processing capability of the terminal.

Referring to FIG. 9, FIG. 9 is a flow chart illustrating a method for a terminal to be scheduled according to another embodiment of the disclosure. The method for the terminal to be scheduled may be executed by the network device in FIG. 1. The method for the terminal to be scheduled may be executed alone, or may be executed together with any embodiment or possible implementation in embodiments of the disclosure, or may be executed together with any technical solution in the related art. As illustrated in FIG. 9, the method for the terminal to be scheduled may include, but is not limited to, the following.

At block 901, a random access message sent by a terminal is received, in which the random access message is used to indicate information on a physical layer channel/signal processing capability of the terminal.

The random access message indicates at least one of the information on the physical layer channel/signal processing capability including: a type of the terminal; a physical uplink shared channel (PUSCH) processing capability and/or a physical downlink shared channel (PDSCH) processing capability of the terminal; or a processing delay of the terminal for the random access message.

In a possible implementation in embodiments of the disclosure, the type of the terminal is one of an evolved terminal with a reduced capability, a normal terminal with a reduced capability, or a normal terminal.

In a possible implementation in embodiments of the disclosure, the random access message is used to indicate the PUSCH processing capability and the PDSCH processing capability of the terminal. The PUSCH processing capability is a relaxed processing capability or an unrelaxed processing capability, and the PDSCH processing capability is a relaxed processing capability or an unrelaxed processing capability.

In a possible implementation in embodiments of the disclosure, the random access message is used to indicate at least one of:

the PUSCH processing capability being a relaxed processing capability, and the PDSCH processing capability being a relaxed processing capability;
the PUSCH processing capability being a relaxed processing capability, and the PDSCH processing capability being an unrelaxed processing capability;
the PUSCH processing capability being an unrelaxed processing capability, and the PDSCH processing capability being a relaxed processing capability; or
the PUSCH processing capability being an unrelaxed processing capability, and the PDSCH processing capability being an unrelaxed processing capability.

In a possible implementation in embodiments of the disclosure, the random access message is a random access message A in a two-step random access; and the processing delay for the random access message is a time interval between a transmitting end time point when the terminal receives a second random access message and a transmitting start time point when the terminal sends a corresponding feedback.

In a possible implementation in embodiments of the disclosure, there is a mapping relationship between the physical layer channel/signal processing capability of the terminal and the processing delay for the random access message.

In a possible implementation in embodiments of the disclosure, the network device further sends second indication information to the terminal. The second indication information is configured to indicate the terminal to activate or deactivate using the random access message to indicate the information on the physical layer channel/signal processing capability.

In a possible implementation in embodiments of the disclosure, the second indication information is configured to indicate at least one of: activating or deactivating using the random access message to indicate the PUSCH processing capability; or activating or deactivating using the random access message to indicate the PDSCH processing capability by.

In a possible implementation in embodiments of the disclosure, the second indication information is configuration information of a resource, and the resource is configured to send the random access message corresponding to the physical layer channel/signal processing capability.

In a possible implementation in embodiments of the disclosure, in case that the terminal is the evolved terminal with the reduced capability, and the random access message sent by the terminal indicates the information on the physical layer channel/signal processing capability.

It should be noted that, the explanation of the method for the terminal to be scheduled executed by the terminal in any of the above embodiments is also applicable to the method for the terminal to be scheduled executed by the network device, which has a similar implementation principle, and may not elaborated here.

At block 902, a transmission of a subsequent message of the terminal is scheduled based on the random access message received.

In embodiments of the disclosure, the subsequent message may include a subsequent random access message and an interaction message of connection establishment between the terminal and a core network device. That is, in the disclosure, the network device may schedule the transmission of the subsequent random access message of the terminal and/or the transmission of the interaction message of the connection establishment between the terminal and the core network device based on the physical layer channel/signal processing capability indicated by the random access message.

In embodiments of the disclosure, the terminal sends the random access message to the network device. The random access message is configured to indicate at least one of the information on the physical layer channel/signal processing capability. Correspondingly, after the random access message is received, the network device may determine the physical layer channel/signal processing capability of the terminal based on the random access message, that is, determine whether the terminal has the relaxed processing capability or the unrelaxed processing capability, thus performing scheduling for the transmission of the subsequent message of the terminal based on the physical layer channel/signal processing capability of the terminal. For example, the processing delay of the terminal for the random access message may be determined based on the physical layer channel/signal processing capability of the terminal, and the transmission of the subsequent message of the terminal may be scheduled based on the processing delay of the terminal for the random access message.

Therefore, the network can may allocate different resources to the transmission of subsequent messages of the terminals with different processing capabilities, such that the terminal may perform message transmission through the resource allocated reasonably, and the resource rescheduling is avoided when the message transmission fails, thus avoiding the resource waste and improving the resource utilization rate.

Different processing capabilities of the terminals are different physical layer channel processing capabilities of the terminals or different physical layer signal processing capabilities of the terminals.

With the method for the terminal to be scheduled in embodiments of the disclosure, the network device receives the random access message sent by the terminal, and schedules a transmission of a subsequent message of the terminal in response to the random access message. The random access message indicates at least one of the information on the physical layer channel/signal processing capability, and the information includes: the type of the terminal; the PUSCH processing capability and/or PDSCH processing capability of the terminal, and the processing delay of the terminal for the random access message. Then, the network device may determine the physical layer channel/signal processing capability of the terminal based on the random access message, that is, determine whether the terminal has the relaxed processing capability or the unrelaxed processing capability, thus performing targeted scheduling for the transmission of the subsequent message of the terminal based on the processing capability of the terminal, and realizing that different resources are allocated to subsequent transmissions of the terminals with different processing capabilities. In this way, the terminal may perform message transmission through the resources allocated reasonably, and the resource rescheduling is avoided when the message transmission fails, thus avoiding the resource waste and improving the resource utilization rate.

It should be noted that, the above possible implementations may be executed separately or in combination, which are not limited in embodiments of the disclosure.

In the above embodiments according to the disclosure, description is made to the method according to embodiments of the disclosure respectively from the perspectives of the terminal and the network device. In order to realize the above functions in the method according to embodiments of the disclosure, the terminal and the network device may include hardware structures and software modules. The above functions are realized in the form of the hardware structures, the software modules, or a combination of the hardware structures and the software modules. One of the above functions may be realized in a way of the hardware structures, the software modules, or the combination of the hardware structures and the software modules.

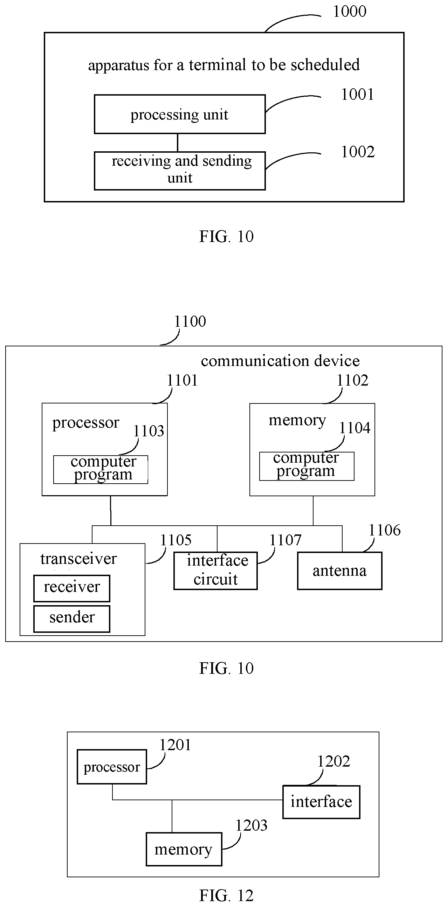

FIG. 10 is a block diagram illustrating an apparatus 1000 for a terminal to be scheduled according to an embodiment of the disclosure. The apparatus may include: a processing unit 1001 and a receiving and sending unit 1002. The receiving and sending unit 1002 may include a sending unit and/or a receiving unit. The sending unit is configured to realize a sending function. The receiving unit is configured to realize a receiving function. The receiving and sending unit may realize the sending function and the receiving function.

The apparatus 1000 for the terminal to be scheduled may be a communication device (such as the terminal or the network device), an apparatus in the communication device, or an apparatus that may be used in matching with the communication device.

In a case, the apparatus 1000 for the terminal to be scheduled is the terminal.

The receiving and sending unit 1002 is configured to send a random access message to a network device, in which the random access message is used for the network device to schedule a transmission of a subsequent message of the terminal.

The random access message indicates at least one of information on a physical layer channel/signal processing capability including: a type of the terminal; a physical uplink shared channel (PUSCH) processing capability and/or a physical downlink shared channel (PDSCH) processing capability of the terminal; or a processing delay of the terminal for the random access message.

In an implementation, the type of the terminal is one of an evolved terminal with a reduced capability, a normal terminal with a reduced capability, or a normal terminal.

In an implementation, the random access message is used to indicate the PUSCH processing capability and the PDSCH processing capability of the terminal. The PUSCH processing capability is a relaxed processing capability or an unrelaxed processing capability; and the PDSCH processing capability is a relaxed processing capability or an unrelaxed processing capability.

In an implementation, the random access message is used to indicate at least one of:

the PUSCH processing capability being a relaxed processing capability, and the PDSCH processing capability being a relaxed processing capability;

the PUSCH processing capability being a relaxed processing capability, and the PDSCH processing capability being an unrelaxed processing capability;

the PUSCH processing capability being an unrelaxed processing capability, and the PDSCH processing capability being a relaxed processing capability; or

the PUSCH processing capability being an unrelaxed processing capability, and the PDSCH processing capability being an unrelaxed processing capability.

In an implementation, the random access message is a random access message A in a two-step random access; and the processing delay for the random access message is a time interval between a transmitting end time point when the terminal receives a second random access message and a transmitting start time point when the terminal sends a corresponding feedback.

In an implementation, there is a mapping relationship between the physical layer channel/signal processing capability of the terminal and the processing delay for the random access message.

In an implementation, the processing unit 1001 is configured to determine indication information from the network device;

The indication information is configured to indicate the terminal to activate or deactivate using the random access message to indicate the information on the physical layer channel/signal processing capability .

In an implementation, the indication information is configured to indicate at least one of: activating or deactivating using the random access message to indicate the PUSCH processing capability; or activating or deactivating using the random access message to indicate the PDSCH processing capability.

In an implementation, the processing unit 1001 is configured to: determine that the indication information is to deactivate using the random access message to indicate the information on the physical layer channel/signal processing capability, in response to resources for sending the random access message corresponding to the physical layer channel/signal processing capability being not configured by the network device; and determine that the indication information is to activate using the random access message to indicate the information on the physical layer channel/signal processing capability in response to the resources for sending the random access message corresponding to the physical layer channel/signal processing capability being configured by the network device.

In an implementation, the terminal is the evolved terminal with the reduced capability, and the random access message sent by the terminal indicates the information on the physical layer channel/signal processing capability.

In a case, the apparatus 1000 for the terminal to be scheduled is the network device.

The receiving and sending unit 1002 is configured to receive a random access message sent by a terminal, in which the random access message is used to indicate information on a physical layer channel/signal processing capability of the terminal.

The processing unit 1001 is configured to schedule a transmission of a subsequent message of the terminal based on the random access message received.

The random access message is used to indicate at least one of the information on the physical layer channel/signal processing capability including: a type of the terminal; a physical uplink shared channel (PUSCH) processing capability and/or a physical downlink shared channel (PDSCH) processing capability of the terminal; or a processing delay of the terminal for the random access message.

In an implementation, the type of the terminal is one of an evolved terminal with a reduced capability, a normal terminal with a reduced capability, or a normal terminal.

In an implementation, the random access message is used to indicate the PUSCH processing capability and the PDSCH processing capability of the terminal. The PUSCH processing capability is a relaxed processing capability or an unrelaxed processing capability; and the PDSCH processing capability is a relaxed processing capability or an unrelaxed processing capability.

In an implementation, the random access message is used to indicate at least one of:

the PUSCH processing capability being a relaxed processing capability, and the PDSCH processing capability being a relaxed processing capability;

the PUSCH processing capability being a relaxed processing capability, and the PDSCH processing capability being an unrelaxed processing capability;

the PUSCH processing capability being an unrelaxed processing capability, and the PDSCH processing capability being a relaxed processing capability; or

the PUSCH processing capability being an unrelaxed processing capability, and the PDSCH processing capability being an unrelaxed processing capability.

In an implementation, the random access message is a random access message A in a two-step random access; and the processing delay for the random access message is a time interval between a transmitting end time point when the terminal receives a second random access message and a transmitting start time point when the terminal sends a corresponding feedback.

In an implementation, there is a mapping relationship between the physical layer channel/signal processing capability of the terminal and the processing delay for the random access message.

In an implementation, indication information is sent to the terminal. The indication information is configured to indicate the terminal to activate or deactivate using the random access message to indicate the information on the physical layer channel/signal processing capability.

In an implementation, the indication information is configured to indicate at least one of: activating or deactivating using the random access message to indicate the PUSCH processing capability; or activating or deactivating using the random access message to indicate the PDSCH processing capability.

In an implementation, the indication information is configuration information of resources, and the resources are configured to send the random access message corresponding to the physical layer channel/signal processing capability.

In an implementation, in case that the terminal is the evolved terminal with the reduced capability, the random access message sent by the terminal indicates the information on the physical layer channel/signal processing capability.

It should be noted that, the explanation of the method executed by the terminal side in any of the embodiments illustrated in FIG. 2 to FIG. 8 or the explanation of the method executed by the network device side in the embodiment illustrated in FIG. 9 is also applicable to the apparatus 1000 for the terminal to be scheduled in this embodiment, which has the similar realization principle is, and is not elaborated here.

Referring to FIG. 11, FIG. 11 is a block diagram illustrating a communication device 1100 according to an embodiment of the disclosure. The communication device 1100 may be the network device, the terminal, or a chip, a chip system, a processor or the like that supports the network device to realize the above method, or a chip, a chip system, a processor or the like that supports the terminal to realize the above method. The communication device may be configured to realize the methods described in the above method embodiments. For details, please refer to the description in the above method embodiments.

The communication device 1100 may include one or more processors 1101. The processor 1101 may be a general-purpose processor or a dedicated processor or the like, such as a baseband processor or a central processing processor. The baseband processor may be configured to process a communication protocol and communication data. The central processing processor may be configured to control the communication device (such as, a device in the network side, a baseband chip, a terminal, a terminal chip, a DU, or a CU), to execute a computer program, and to process data of the computer program.

Alternatively, the communication device 1100 may further include one or more memories 1102 for storing a computer program 1104. The processor 1101 is configured to execute the computer program 1104, to enable the communication device 1100 to execute the method described in the above method embodiments. Alternatively, the memory 1102 may also store data. The communication device 1100 and the memory 1102 may be disposed separately or integrated together.

Alternatively, the communication device 1100 may further include a transceiver 1105 and an antenna 1106. The transceiver 1105 may be referred to as a transceiver unit, a transceiver, a transceiver circuit or the like for realizing a receiving and sending function. The transceiver 1105 may include a receiver and a sender. The receiver may be referred to as a receiver or a receiving circuit, for realizing a receiving function. The sender may be referred to as a sender or a sending circuit for realizing a sending function.

Alternatively, the communication device 1100 may further include one or more interface circuits 1107. The interface circuit 1107 is configured to receive code instructions and transmit the code instructions to the processor 1101. The processor 1101 runs the code instructions to enable the communication device 1100 to execute the method described in the above method embodiments.

In case that the communication device 1100 is the terminal, the transceiver 1105 is configured to execute the actions at block 201 in FIG. 2, the actions at block 301 in FIG. 3, the actions at block 401 in FIG. 4, the actions at block 501 in FIG. 5, the actions at block 601 in FIG. 6, the actions at block 701 in FIG. 7, and the actions at block 801 in FIG. 8.

In case that the communication device 1100 is the network device, the transceiver 1105 is configured to execute the actions at block 901 in FIG. 9. The processor 1101 is configured to execute the actions at block 902 in FIG. 9

In an implementation, the processor 1101 may include a transceiver for realizing the receiving and sending functions. For example, the transceiver may be a transceiver circuit, an interface, or an interface circuit. The transceiver circuit, the interface, or the interface circuit for realizing the receiving and sending functions may be separate or integrated together. The transceiver circuit, the interface, or the interface circuit may be configured to read and write codes/data, or the transceiver circuit, the interface, or the interface circuit may be configured to signal transmission or delivery.

In an implementation, the processor 1101 may store a computer program 1103. The computer program 1103 running on the processor 1101 may cause the communication device 1100 to execute the method described in the above method embodiments. The computer program 1103 may be solidified in the processor 1101. In this case, the processor 1101 may be implemented by hardware.

In an implementation, the communication device 1100 may include a circuit. The circuit may realize a function of sending, receiving or communicating in the above method embodiments. The processor and the transceiver described in the disclosure may be implemented in an integrated circuit (IC), an analog IC, a radio frequency integrated circuit (RFIC), a mixed signal IC, an application specific integrated circuit (ASIC), a printed circuit board (PCB), an electronic device, etc. The processor and the transceiver may also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device described in the above embodiments may be the network device or the terminal, but a scope of the communication device described in the disclosure is not limited thereto, and a structure of the communication device may not be limited by FIG. 11. The communication device may be a standalone device or may be part of a larger device. For example, the communication device may be:

(1) a stand-alone IC, a chip, a chip system or a subsystem;
(2) a collection of ICs including one or more ICs, alternatively, the collection of ICs also including storage components for storing data and computer programs;
(3) an ASIC, such as a modem;
(4) modules that may be embedded in other devices;
(5) a receiver, a terminal, a smart terminal, a cellular phone, a wireless device, a handheld machine, a mobile unit, an in-vehicle device, a network device, a cloud device, an artificial intelligence device, and the like; or
(6) others.

For the case where the communication device may be the chip or the chip system, please refer to a block diagram of the chip illustrated in FIG. 12. The chip illustrated in FIG. 12 includes a processor 1201 and an interface 1202. There may be one or more processors 1201, and there may be more than one interface 1202.

Alternatively, the chip further includes a memory 1203. The memory 1203 is configured to store necessary computer programs and data.

It may be understood by those skilled in the art that various illustrative logical blocks and steps listed in embodiments of the disclosure may be implemented by electronic hardware, computer software, or a combination of both. Whether such function is implemented by hardware or software depends on a particular application and a design requirement of the entire system. Those skilled in the art may, for each particular application, use various methods to execute the described function, but such implementation should not be understood as beyond the scope of protection of embodiments of the disclosure.

The disclosure further provides a readable storage medium for storing instructions stored. When the instructions are executed by a computer, the functions according to any of the above method embodiments are realized.

The disclosure further provides a computer program product. When the computer program product is executed by a computer, the functions according to any of the above method embodiments are realized.

The above embodiments may be implemented in whole or in part by software, hardware, firmware, or any combination thereof. When implemented using software, the above embodiments may be implemented, in whole or in part, in the form of the computer program product. The computer program product includes one or more computer programs. When loading and executing the computer program in the computer, all or part of processes or functions described in embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired way (e.g., using coaxial cables, fiber optics, or digital subscriber lines (DSLs) or wireless way (e.g., using infrared wave, wireless wave, or microwave). The computer-readable storage medium may be any usable medium to which the computer is capable to access or a data storage device such as a server integrated by one or more usable mediums and a data center. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art may understand that various numerical numbers such as the first, second, and the like involved in the disclosure are only described for the convenience of differentiation, and are not used to limit the scope of embodiments of the disclosure, or used to indicate the order of precedence.

The term "at least one" in the disclosure may also be described as one or more, and the term "more than one" may be two, three, four, or more, which is not limited in the disclosure. In embodiments of the disclosure, for a type of technical features, the term "first", "second", and "third", "A", "B", "C" and "D" and the like are used to distinguish different technical features of the type, the technical features described using the "first", "second", and "third", and "A", "B", "C" and "D" do not indicate any order of precedence or magnitude.

The mapping relationships illustrated in the tables in the disclosure may be configured or may be predefined. The values of information in the tables are merely examples and may be configured to other values, which are not limited in the disclosure. In configuring the mapping relationship between the information and the parameter, it is not necessarily required that all the mapping relationships illustrated in the tables must be configured. For example, the mapping relationships illustrated in certain rows in the tables in this disclosure may not be configured. For another example, the above tables may be adjusted appropriately, such as splitting, combining, and the like. The names of the parameters illustrated in the titles of the above tables may be other names that may be understood by the communication device, and the values or representations of the parameters may be other values or representations that may be understood by the communication device. Each of the above tables may also be implemented with other data structures, such as, arrays, queues, containers, stacks, linear tables, pointers, chained lists, trees, graphs, structures, classes, heaps, and Hash tables.

The term "predefine" in the disclosure may be understood as define, define in advance, store, pre-store, pre-negotiate, pre-configure, solidify, or pre-fire.

Those skilled in the art may realize that the units and algorithmic steps of the various examples described in combination with embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the art that, for the convenience and brevity of description, the specific working processes of the systems, apparatuses, and units described above can be referred to the corresponding processes in the preceding method embodiments, which are not elaborated herein.

The above are only specific implementations of the disclosure, but the scope of protection of the disclosure is not limited thereto. Those skilled in the art familiar to the technical field can easily think of changes or substitutions in the technical scope disclosed by the disclosure, which shall be covered by the scope of protection of the disclosure. Therefore, the scope of protection of the disclosure shall be governed by the scope of protection of the appended claims.

## Claims

1. A method for a terminal to be scheduled, executed by the terminal, comprising:

   sending a random access message to a network device, wherein the random access message is used for the network device to schedule a transmission of a subsequent message of the terminal;
   wherein the random access message indicates at least one of information on a physical layer channel/signal processing capability comprising:

   a type of the terminal;
   a physical uplink shared channel (PUSCH) processing capability and/or a physical downlink shared channel (PDSCH) processing capability of the terminal; or
   a processing delay of the terminal for the random access message.

2. The method of claim 1, wherein the type of the terminal is one of an evolved terminal with a reduced capability, a normal terminal with a reduced capability, or a normal terminal.

3. The method of claim 1, wherein the random access message is used to indicate the PUSCH processing capability and the PDSCH processing capability of the terminal;
   wherein the PUSCH processing capability is a relaxed processing capability or an unrelaxed processing capability; and the PDSCH processing capability is a relaxed processing capability or an unrelaxed processing capability.

4. The method of claim 1, wherein the random access message is used to indicate at least one of:

   the PUSCH processing capability being a relaxed processing capability, and the PDSCH processing capability being a relaxed processing capability;
   the PUSCH processing capability being a relaxed processing capability, and the PDSCH processing capability being an unrelaxed processing capability;

the PUSCH processing capability being an unrelaxed processing capability, and the PDSCH processing capability being a relaxed processing capability; or

the PUSCH processing capability being an unrelaxed processing capability, and the PDSCH processing capability being an unrelaxed processing capability.

5. The method of claim 1, wherein the random access message is a random access message A in a two-step random access; and

the processing delay for the random access message is a time interval between a transmitting end time point when the terminal receives a second random access message and a transmitting start time point when the terminal sends a corresponding feedback.

6. The method of claim 1, wherein there is a mapping relationship between the physical layer channel/signal processing capability of the terminal and the processing delay for the random access message.

7. The method of any of claims 1 to 6, further comprising:

determining indication information from the network device;

wherein the indication information is configured to indicate the terminal to activate or deactivate using the random access message to indicate the information on the physical layer channel/signal processing capability .

8. The method of claim 7, wherein the indication information is configured to indicate at least one of:

activating or deactivating using the random access message to indicate the PUSCH processing capability ; or

activating or deactivating using the random access message to indicate the PDSCH processing capability .

9. The method of claim 7, wherein determining the indication information from the network device comprises:

in response to resources for sending the random access message corresponding to the physical layer channel/signal processing capability being not configured by the network device, determining that the indication information is to deactivate using the random access message to indicate the information on the physical layer channel/signal processing capability; and

in response to the resources for sending the random access message corresponding to the physical layer channel/signal processing capability being configured by the network device, determining that the indication information is to activate using the random access message to indicate the information on the physical layer channel/signal processing capability.

10. The method of any of claims 1 to 6, wherein the terminal is an evolved terminal with a reduced capability, and the random access message sent by the terminal indicates the information on the physical layer channel/signal processing capability.

11. A method for a terminal to be scheduled, executed by a network device, comprising:

receiving a random access message sent by the terminal, wherein the random access message is used to indicate information on a physical layer channel/signal processing capability of the terminal; and

scheduling a transmission of a subsequent message of the terminal based on the random access message received,

wherein the random access message indicates at least one of the information on the physical layer channel/signal processing capability comprising:

a type of the terminal;

a physical uplink shared channel (PUSCH) processing capability and/or a physical downlink shared channel (PDSCH) processing capability of the terminal; or

a processing delay of the terminal for the random access message.

12. The method of claim 11, wherein the type of the terminal is one of an evolved terminal with a reduced capability, a normal terminal with a reduced capability, or a normal terminal.

13. The method of claim 11, wherein the random access message is used to indicate the PUSCH processing capability and the PDSCH processing capability of the terminal;
wherein the PUSCH processing capability is a relaxed processing capability or an unrelaxed processing capability; and the PDSCH processing capability is a relaxed processing capability or an unrelaxed processing capability.

14. The method of claim 11, wherein the random access message is used to indicate at least one of:

the PUSCH processing capability being a relaxed processing capability, and the PDSCH processing capability being a relaxed processing capability;
the PUSCH processing capability being a relaxed processing capability, and the PDSCH processing capability being an unrelaxed processing capability;
the PUSCH processing capability being an unrelaxed processing capability, and the PDSCH processing capability being a relaxed processing capability; or
the PUSCH processing capability being an unrelaxed processing capability, and the PDSCH processing capability being an unrelaxed processing capability.

15. The method of claim 11, wherein the random access message is a random access message A in a two-step random access; and
the processing delay for the random access message is a time interval between a transmitting end time point when the terminal receives a second random access message and a transmitting start time point when the terminal sends a corresponding feedback.

16. The terminal scheduling method of claim 11, wherein there is a mapping relationship between the physical layer channel/signal processing capability of the terminal and the processing delay for the random access message.

17. The method of any of claims 11 to 16, further comprising:

sending indication information to the terminal;
wherein the indication information is configured to indicate the terminal to activate or deactivate using the random access message to indicate the information on the physical layer channel/signal processing capability.

18. The method of claim 17, wherein the indication information is configured to indicate at least one of:

activating or deactivating using the random access message to indicate the PUSCH processing capability; or
activating or deactivating using the random access message to indicate the PDSCH processing capability.

19. The method of claim 17, wherein the indication information is configuration information of resources, and the resources are configured to send the random access message corresponding to the physical layer channel/signal processing capability.

20. The method of any of claims 11 to 16, wherein in case that the terminal is an evolved terminal with a reduced capability, the random access message sent by the terminal indicates the information on the physical layer channel/signal processing capability.

21. An apparatus for a terminal to be scheduled, comprising:

a receiving and sending unit, configured to send a random access message to a network device, wherein the random access message is used for the network device to schedule a transmission of a subsequent message of the terminal;
wherein the random access message indicates at least one of information on a physical layer channel/signal processing capability including:

a type of the terminal;
a physical uplink shared channel (PUSCH) processing capability and/or a physical downlink shared channel (PDSCH) processing capability of the terminal; or
a processing delay of the terminal for the random access message.

22. A apparatus for a terminal to be scheduled, comprising:

a receiving and sending unit, configured to receive a random access message sent by a terminal, wherein the random access message is used to indicate information on a physical layer channel/signal processing capability of the terminal; and

a processing unit, configured to schedule a transmission of a subsequent message of the terminal based on the random access message received,

wherein the random access message indicates at least one of the information on the physical layer channel/signal processing capability including:

a type of the terminal;

a physical uplink shared channel (PUSCH) processing capability and/or a physical downlink shared channel (PDSCH) processing capability of the terminal; or

a processing delay of the terminal for the random access message.

23. A communication device, comprising a processor and a memory for storing a computer program, wherein when the computer program is executed by the processor, the communication device is caused to realize the method according to any of claims 1 to 10.

24. A communication device, comprising a processor and a memory for storing a computer program, wherein when the computer program is executed by the processor, the communication device is caused to realize the method according to any of claims 11 to 20.

25. A communication device, comprising: a processor and an interface circuit, wherein

the interface circuit is configured to receive code instructions and to transmit the code instructions to the processor; and

the processor is configured to execute the code instructions, to execute the method according to any one of claims 1 to 10.

26. A communication device, comprising: a processor and an interface circuit, wherein

the interface circuit is configured to receive code instructions and to transmit the code instructions to the processor; and

the processor is configured to execute the code instructions, to execute the method according to any one of claims 11 to 20.

27. A computer-readable storage medium, configured to store instructions, wherein when the instructions are executed, the method according to any one of claims 1 to 10 is realized.

28. A computer-readable storage medium, configured to store instructions, wherein when the instructions are executed, the method according to any one of claims 11 to 20 is realized.

Network device 101                    Terminal 102

FIG. 1

| sending a random access message to a network device, in which the random access message is used for the network device to schedule a transmission of a subsequent message of the terminal, the random access message indicates information on a physical layer channel/signal processing capability including at least one of: a type of the terminal; a physical uplink shared channel (PUSCH) processing capability and/or a physical downlink shared channel (PDSCH) processing capability of the terminal; or a processing delay of the terminal for the random access message | 201 |

FIG. 2

| sending a random access message to a network device, in which the random access message indicates at least one of information on a physical layer channel/signal processing capability including at least one of: a type of the terminal; a physical uplink shared channel (PUSCH) processing capability and/or a physical downlink shared channel (PDSCH) processing capability of the terminal; or a processing delay of the terminal for the random access message, in which the random access message is used to indicate the PUSCH processing capability and the PDSCH processing capability of the terminal, and the PUSCH processing capability is a relaxed processing capability or an unrelaxed processing capability; and the PDSCH processing capability is a relaxed processing capability or an unrelaxed processing capability | 301 |

FIG. 3

sending a random access message to a network device, in which the random access message indicates at least one of information on a physical layer channel/signal processing capability including: a type of the terminal; a physical uplink shared channel (PUSCH) processing capability and/or a physical downlink shared channel (PDSCH) processing capability of the terminal; or a processing delay of the terminal for the random access message, in which the random access message is used to respectively indicate the PUSCH processing capability and the PDSCH processing capability of the terminal

401

FIG. 4

determining indication information of a network device, in which, the indication information is configured to indicate the terminal to activate or deactivate using the random access message to indicate information on the physical layer channel/signal processing capability

501

FIG. 5

determining indication information of a network device, in which, the indication information is configured to indicate at least one of activating or deactivating using the random access message to indicate the PUSCH processing capability; or activating or deactivating using the random access message to indicate the PDSCH processing capability

601

FIG. 6

in response to resources for sending the random access message corresponding to the physical layer channel/signal processing capability being not configured by the network device, determining that the indication information is to deactivate using the random access message to indicate the information on the physical layer channel/signal processing capability

701

in response to the resources for sending the random access message corresponding to the physical layer channel/signal processing capability being configured by the network device, determining that the indication information is to activate using the random access message to indicate the information on the physical layer channel/signal processing capability

702

FIG. 7

sending a random access message to a network device, in which the random access message is used for the network device to schedule a transmission of a subsequent message of a terminal, and the random access message sent by the terminal indicates information on a physical layer channel/signal processing capability in case that the terminal is an evolved terminal with a reduced capability

801

FIG. 8

receiving a random access message sent by a terminal , in which the random access message is used to indicate information on a physical layer channel/signal processing capability of the terminal

901

scheduling a transmission of a subsequent message of the terminal based on the random access message received

902

FIG. 9

1000

apparatus for a terminal to be scheduled

processing unit — 1001

receiving and sending unit — 1002

FIG. 10

1100

communication device

1101     1102

processor 1103

computer program

memory 1104

computer program

transceiver

receiver

sender

1105

interface circuit

1107

antenna

1106

FIG. 10

1201

processor

1202

interface

1203

memory

FIG. 12

## INTERNATIONAL SEARCH REPORT

| International application No. |
| --- |
| **PCT/CN2022/089405** |

### A. CLASSIFICATION OF SUBJECT MATTER

H04W 72/12(2023.01)i

According to International Patent Classification (IPC) or to both national classification and IPC

### B. FIELDS SEARCHED

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNTXT, ENTXTC, ENTXT, VEN, 3GPP, CNKI, IEEE: 随机接入, 资源分配, 调度, 物理上行共享信道, 物理下行共享信道, 放松, 放大, 扩大, 终端, 基站, 网络, 时延, 能力, 类型, 型号, random access, resource allocat+, schedul+, PUSCH, PDSCU, amplif+, enlarge, terminal, eNB, eNodeB, station, network, delay, latency, capability, type, model

### C. DOCUMENTS CONSIDERED TO BE RELEVANT

| Category* | Citation of document, with indication, where appropriate, of the relevant passages | Relevant to claim No. |
| --- | --- | --- |
| X | CN 113966008 A (CHINA MOBILE RESEARCH INSTITUTE et al.) 21 January 2022 (2022-01-21)<br>description, paragraphs 2-220, and figures 1-16 | 1-28 |
| A | CN 113676293 A (HUAWEI TECHNOLOGIES CO., LTD.) 19 November 2021 (2021-11-19)<br>entire document | 1-28 |
| A | CN 111885684 A (HUAWEI TECHNOLOGIES CO., LTD.) 03 November 2020 (2020-11-03)<br>entire document | 1-28 |
| A | CN 111901835 A (ZTE CORP.) 06 November 2020 (2020-11-06)<br>entire document | 1-28 |
| A | US 2019182870 A1 (ASUSTEK COMPUTER INC.) 13 June 2019 (2019-06-13)<br>entire document | 1-28 |
| A | US 2020267701 A1 (LG ELECTRONICS INC.) 20 August 2020 (2020-08-20)<br>entire document | 1-28 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **05 January 2023** | **18 January 2023** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

| International application No. |
| --- |
| **PCT/CN2022/089405** |

| Patent document cited in search report | | | Publication date (day/month/year) | Patent family member(s) | | | Publication date (day/month/year) |
| --- | --- | --- | --- | --- | --- | --- | --- |
| CN | 113966008 | A | 21 January 2022 | None | | | |
| CN | 113676293 | A | 19 November 2021 | WO | 2021228256 | A1 | 18 November 2021 |
| CN | 111885684 | A | 03 November 2020 | None | | | |
| CN | 111901835 | A | 06 November 2020 | WO | 2021147580 | A1 | 29 July 2021 |
| | | | | IN | 202247042565 | A | 29 July 2022 |
| | | | | KR | 20220130193 | A | 26 September 2022 |
| US | 2019182870 | A1 | 13 June 2019 | JP | 2019106699 | A | 27 June 2019 |
| | | | | CN | 109922534 | A | 21 June 2019 |
| | | | | KR | 20190070841 | A | 21 June 2019 |
| | | | | TW | 201929592 | A | 16 July 2019 |
| | | | | US | 2021007150 | A1 | 07 January 2021 |
| | | | | EP | 3500038 | A1 | 19 June 2019 |
| | | | | ES | 2759624 | T3 | 11 May 2020 |
| | | | | IN | 201814038767 | A | 14 June 2019 |
| | | | | EP | 3500038 | B1 | 23 October 2019 |
| | | | | JP | 6630422 | B2 | 15 January 2020 |
| | | | | KR | 102110682 | B1 | 14 May 2020 |
| | | | | CN | 109922534 | B | 23 June 2020 |
| | | | | US | 10813137 | B2 | 20 October 2020 |
| | | | | HK | 40007664 | A0 | 05 June 2020 |
| | | | | TW | 691227 | B1 | 11 April 2020 |
| US | 2020267701 | A1 | 20 August 2020 | US | 2022279492 | A1 | 01 September 2022 |
| | | | | CN | 113424602 | A | 21 September 2021 |
| | | | | EP | 3913995 | A1 | 24 November 2021 |
| | | | | WO | 2020167071 | A1 | 20 August 2020 |
| | | | | EP | 3913995 | A4 | 23 March 2022 |
| | | | | US | 11350399 | B2 | 31 May 2022 |

Form PCT/ISA/210 (patent family annex) (January 2015)

**REFERENCES CITED IN THE DESCRIPTION**

**Non-patent literature cited in the description**

- *3GPP standard TS38.214*